# EUROPEAN PATENT SPECIFICATION

(11) **EP 2 734 447 B1**
(45) Date of publication and mention of the grant of the patent: **09.09.2015**
(21) Application number: 12740737.7
(22) Date of filing: 06.07.2012
(51) Int. Cl.: B64F 1/36, G08B 13/191

(54) **CONVEYING SYSTEM FOR PIECES OF LUGGAGE, CHECK-IN SYSTEM COMPRISING SUCH A CONVEYING SYSTEM AND METHOD FOR USING SUCH A CONVEYING SYSTEM**
FÖRDERSYSTEM FÜR GEPÄCKSTÜCKE, ABFERTIGUNGSSYSTEM MIT EINEM SOLCHEN FÖRDERSYSTEM UND VERFAHREN ZUR VERWENDUNG EINES DERARTIGEN FÖRDERSYSTEMS
SYSTÈME DE TRANSPORT POUR BAGAGES, SYSTÈME D'ENREGISTREMENT COMPRENANT UN TEL SYSTÈME DE TRANSPORT ET PROCÉDÉ D'UTILISATION DE CE SYSTÈME DE TRANSPORT

(30) Priority: 19.07.2011 NL 2007140
(43) Date of publication of application: 28.05.2014
(73) Proprietor: Vanderlande Industries B.V., 5466 RB Veghel (NL)
(72) Inventor: BUNKERS, Marcel Jan Cornelis Maria, NL-5685 BT Best (NL)
(74) Representative: Algemeen Octrooi- en Merkenbureau B.V.
(86) International application number: PCT/NL2012/050484
(87) International publication number: WO 2013/012321

(56) References cited:
- WO-A1-2005/087590
- WO-A1-2008/082300

## Description

The present invention relates to a conveying system for pieces of luggage, comprising a conveyor for conveying pieces of luggage, detection means provided with a camera for making an image of at least one object, normally being a single piece of luggage, present on the conveyor at a checking location, and image processing means for the automated processing of images made by the camera.

Both for safety reasons and for security reasons it is desirable that pieces of luggage being conveyed by conveying systems be checked, in particular after they have been checked in. Children or animals, for example, appear to escape the eye of their escorts and airport personnel with some degree of regularity and find their way into an airport's automated luggage handling system via a conveying system. It is furthermore conceivable for child/baby seats with a child secured therein or pets in a cage to be checked in by a passenger, in particular at an unmanned check-in station. In addition to that, conveying systems for pieces of luggage also provide possibilities for grown-ups to enter secured areas of an airport without being detected, with all the risks involved.

In International patent application WO 2005/087590 A1 it is described that use can be made of infrared camera detection at a conveying system forming part of a check-in station for detecting the presence of living creatures on the conveying system in question. The use of infrared detection for detecting living creatures may have the drawback that in practice a large number of detections are made which, upon closer inspection, do not involve a living creature. Especially if, as a precaution, the conveying system in question is stopped each time a detection is made, this will lead to a very awkward working situation. After all, personnel will have to verify each time whether or not the detection in question involves a living creature (which usually will not be the case). Possibly, checking in cannot take place during that time, or in any case only at a decreased capacity.

The object of the present invention is to provide a conveying system as can advantageously be used in particular, but not exclusively, in a check-in system, wherein the number of false alerts to the presence of a living creature on a conveyor of the conveying system is reduced as much as possible. In order to achieve that object, the present invention provides a conveying system as described in the introductory paragraph, wherein the camera is a camera designed to make images of the infrared type, wherein the image processing means are designed to process images of the infrared type and the image processing means have at their disposal information regarding infrared images of non-suspect pieces of luggage exhibiting at least one area with an elevated temperature, wherein the image processing means are further designed to make a comparison between an infrared image made by the camera that exhibits at least one elevated temperature area and said information for deeming or not deeming the at least one object that is the subject of the infrared image made by the camera to be "suspect" on the basis of the comparison by the image processing means. The information regarding infrared images of non-suspect pieces of luggage may for example be available in the form of a digital library of infrared images exhibiting at least one elevated temperature area, possibly, for example, in combination with an algorithm by means of which the image processing means can determine to what extent infrared images made by the camera may maximally deviate from infrared images from the library so as not to be deemed to be "suspect". Such information may also exclusively be available, for example, in the form of an algorithm. Within the context of the term "elevated temperature", temperatures of, for example, at least 20, 22 or 24 degrees Celsius may be thought of, or in any case temperatures which are for example 2 or 4 degrees Celsius higher than the ambient temperature. Such temperatures are higher than the temperatures that pieces of luggage normally have. In addition to that, the fact that body parts that are covered, for example by clothing, will exhibit a lower temperature on an infrared image, for example a temperature of 30 degrees Celsius or 25 degrees Celsius, is taken into account. It is important that the infrared image comprises at least one area with a temperature higher than that of another area shown on the infrared image. After all, such an elevated temperature area might indicate the presence of a living creature. The present invention is based, inter alia, on the surprising perception that the presence of such elevated temperature areas may also be caused by "innocent" factors and on the fact that such conditions can also be established by image processing means. In those cases the invention provides the possibility that, in spite of the fact that an elevated temperature area shows up on an infrared image being viewed, the object that is the subject of the infrared image being viewed is not deemed to be "suspect". The conveying process and, in the case that the invention is used in a check-in system, the check-in process can proceed without interruption without human interference being required. Conditions in which an infrared image does exhibit an elevated temperature area but in which there is no question of a suspect situation may occur, for example, in the case of a suitcase on wheels. The friction that occurs at the location of the wheels, in particular in the case of bad wheel bearings, may result in one or two elevated temperature areas showing up on the infrared image. The invention makes it possible for the image processing means to recognize such a situation because such elevated temperature areas will invariably occur in a corner of a piece of luggage, for example, and their size will be limited. Thus, false alarms can be prevented. Another example is a piece of luggage that has been sealed with a plastic foil at an airport. This service is frequently offered to passengers at airports. The foil is heated upon sealing, and elevated temperature areas form in particular at overlap areas and at seams. This type of situations, too, can be recognized as "non-suspect" by the image processing means, for example because the areas are elongate in shape and extend parallel to each other and also within the rectangular contours of a suitcase.

Advantageously, the camera may also be designed to make images of the visible light type and/or the detection means may also comprise a further camera designed to make images of the visible light type. Images of the visible light type may also be helpful in assessing an object that is the subject of an image made by a camera.

Said assessment can in any case be carried out with minimal or even entirely without human interference if the image processing means are also designed to process images of the visible light type. Thus, also information derived from the images of the visible light type and processed by the image processing means can be used for taking a decision on whether or not to deem an object to be "suspect".

The latter advantage may also play a part if, alternatively or in combination with said further camera, the detection means comprise a still further camera designed to make 3-dimensional images, wherein the image processing means are also designed to process information regarding the 3-dimensional nature of an image made by said still further camera. Using the information in question, it is possible to derive a height profile of objects.

A suitable embodiment of said still further camera is obtained if said camera is of the line-scanning type. When such a camera is used, lines whose height can be determined are projected over the object, on the basis of which lines the image processing means are capable of deriving a 3-dimensional image.

Said still further camera may be of the near IR type, for example.

The assessment of objects can be further facilitated if the conveying system also comprises recording means for recording images made by at least one camera of the detection means. Such images are preferably of the motion type, whilst the camera of the detection means that is used is of the filming type.

Both for security reasons and for safety reasons it is preferable if the conveying system also comprises blocking means for blocking a passage to pieces of luggage, using a blocking element, which passage is located downstream of the checking location. Putting the blocking element in an operative state prevents persons and/or animals from finding their way into a secured area downstream of the blocking element.

The invention can be used in particular, but not exclusively, with a check-in system. Said system is a check-in system for pieces of luggage, comprising a conveying system according to the invention as discussed in the foregoing, wherein the check-in system comprises at least one check-in station and wherein the conveyor of the conveying system is designed to convey checked-in pieces of luggage from said at least one check-in station to a luggage handling system.

An efficient use of the (costly) camera is realised if the check-in system comprises a number of check-in stations arranged in a row, wherein the conveyor extends along the row of check-in stations and wherein the camera for making infrared images is designed to make images of pieces of luggage on the conveyor on the downstream side of the row of check-in stations.

Preferably, the check-in system includes a supply conveyor for each check-in station, which conveyor discharges into the conveyor of the conveying system. All pieces of luggage being supplied to the conveyor from the various check-in stations by the supply conveyors can be checked by means of the camera.

The invention further relates to a method for using a conveying system according to the invention. The method according to the invention comprises the steps of:
- making an infrared image of at least one object, normally being a single piece of luggage on the conveyor, using a camera,
- the image processing means comparing an infrared, image made by the camera with information regarding infrared images of non-suspect pieces of luggage exhibiting at least one elevated temperature area if the image in question comprises at least one elevated temperature area,
- the image processing means deeming the at least one object that is the subject of the infrared image made by the camera to be "suspect" if it has been established upon said comparison that the infrared image in question does not correspond to an infrared image which, according to said information, relates to non-suspect pieces of luggage.

As has already become clear from the above explanation of the conveying system according to the invention, also the method according to the invention provides the advantage that, by making use of image processing means capable of processing infrared images and making a comparison with information regarding infrared images of non-suspect pieces of luggage, an alarm will not be sounded in all situations in which an infrared image made by the camera exhibits an elevated temperature area. The number of false alerts thus increases, as a result of which the conveying process, and/or the check-in process can proceed without interruption. In addition, the burden on staff will be less and they will react more alertly in the event of an alarm.

Preferably, further measures for checking an object are taken if said object has been deemed to be "suspect" by the image processing means, said further measures comprising a person designating an object that has been deemed to be "suspect" by the image processing means as "correctly suspect" or "incorrectly suspect" on the basis on observations of the object by said person. Precisely because personnel will be less frequently confronted with false alerts, they will react more alertly in the event that an alarm is sounded by the system in the sense that an object has been deemed to be "suspect".

A reliable division of objects deemed to be "suspect" into "correctly suspect", in which case additional measures will be needed, and "incorrectly suspect", in which case no additional measures will be needed, can be effected if the method according to the invention comprises the steps of:
- making video images of the visual type of pieces of luggage while said pieces of luggage are being conveyed by the conveyor and storing said images, at least temporarily, whilst the infrared images of said pieces of luggage are being made by the infrared camera,
- displaying stored video images of an object to the person for checking the object deemed to be "suspect" by the image processing means in order that further measures can be taken,
- said person designating the object deemed to be "suspect" by the image processing means as "correctly suspect" or "incorrectly suspect" at least partially on the basis of the images being displayed.

The images displayed to the person preferably start before the infrared image of the object deemed to be "suspect" by the image processing means was made, for example 5 seconds prior thereto. The person can thus gain an adequate insight into what has taken place in the surroundings of the object around the time the infrared image of the object was made.

In order to make effective checking of an object deemed to be "suspect" possible, the measures for checking the object in question preferably comprise stopping the conveyor and/or physically blocking, using a blocking element, a passage located downstream of the checking location.

If the person has designated the piece of luggage in question as "correctly suspect", it is preferable that still further measures be taken for checking the object in question. Said still further measures preferably comprise the steps of:
- the checking of the object in question by at least one person at the location of the object in question, and/or
- the stopping of at least one further conveyor connecting to the conveyor at an upstream location.

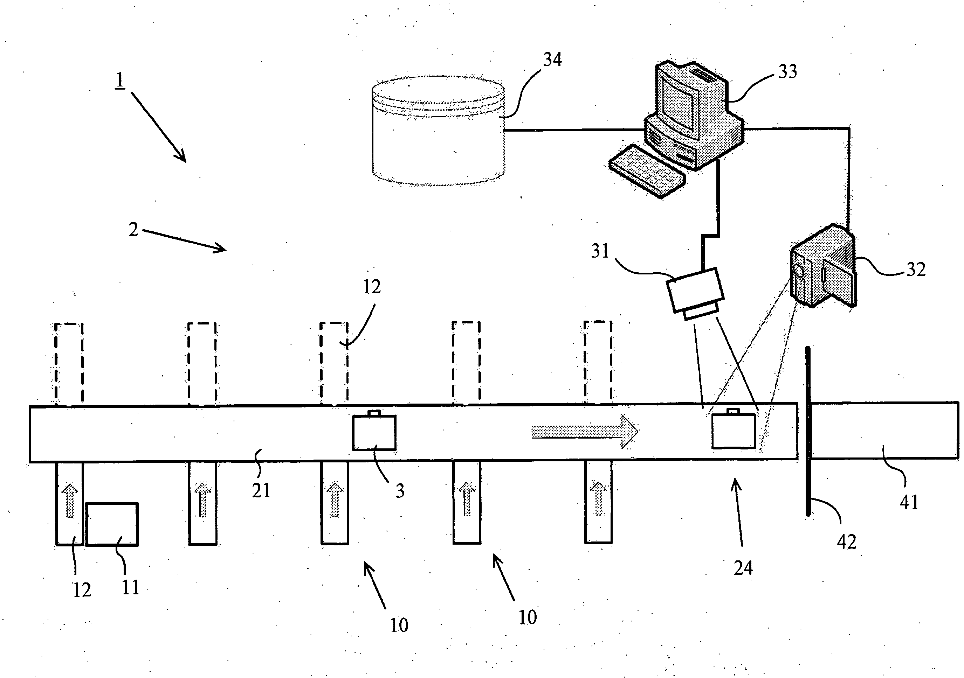

The invention will now be explained in more detail on the basis of a possible embodiment of the invention with reference to the single figure.

The figure schematically shows a check-in system 1 in so far as relevant to a correct understanding of the invention. The check-in system 1 comprises a number (ten in this example) of manned or unmanned check-in stations 10, which are disposed in two opposite rows. Each check-in station 10 comprises a check-in counter 11 (only one of which is shown in the figure), as well as a supply belt conveyor 12. Each supply belt conveyor 12 discharges onto a belt conveyor 21 for supplying a piece of luggage 3 checked in at a check-in station 10 to the belt conveyor 21.

Disposed beside the belt conveyor 21, downstream of the two rows of check-in stations 10, is a camera 31 designed to make infrared images of successive pieces of luggage 3 passing on the belt conveyor 21 at a checking location 24. In addition to that, a video camera 32 is provided beside the belt conveyor 21 for continuously making motion images of passing pieces of luggage 3 whilst infrared images thereof are made by the camera 31. The camera 31 and the video camera 32 are connected to a computer system 33 provided with storage means 34, such as a hard disk, for example, on which images made by the camera 31 and the video camera 32 can be stored.

In use, an infrared image is made of every object, as a rule being a piece of luggage, 3, by the camera 31 at the checking location 24. The infrared images that are made may exhibit one or more areas with an elevated temperature. In practice, such a temperature will be a temperature a temperature in excess of 22°C or 24°C, for example. Depending in part on the ambient temperature, a piece of luggage will normally have a lower temperature. An elevated temperature area on an infrared image might indicate the presence of a human being or an animal of, in other words, a living creature. The possible presence of a living creature on the belt conveyor 21 would imply a security or safety risk, of course, and consequently a further check of the object, whether or not being a piece of luggage, is needed. Such a check may for example consist of the conveyor belt 21 being stopped and personnel checking the object at the checking location 24. During that time, also the check-in process at the various check-in stations 10 may be disturbed because the supply of checked-in pieces of luggage from the supply belt conveyors 12 to the stationary belt conveyor 21 is not possible. Once personnel have determined that there is no question of suspect conditions, the belt conveyor 21 can be started again.

In order to prevent categorically having to carry out the aforesaid further check of the object in question each time at least one elevated temperature area shows up on an infrared image, the invention provides image processing means, which compare the infrared image in question with information regarding infrared images of non-suspect pieces of luggage exhibiting at least one elevated temperature area. Said information may for example consist of a digital library of infrared images exhibiting at least one elevated temperature area, showing objects/pieces of luggage that are known not to be suspect. The library may be stored on the storage means 34, for example. Alternatively, or in combination with the aforesaid library, the information may also consist of an algorithm comprising a definition or a number of definitions of non-suspect infrared images or a definition of the extent to which an infrared image made by the camera 31 may deviate from the infrared images from the library. In fact, the image processing means may consist of software installed on the computer system 33.

Based on the comparison made by the image processing means between an image made by the camera 31 and the aforesaid information, the image processing means deem the object shown on the infrared image in question to be "suspect" or "non-suspect". In the foregoing, situations have been cited in which an infrared image does exhibit an elevated temperature area without this implying a suspect situation. If such a non-suspect situation is recognised by the image processing means on the basis of the aforesaid comparison, an object will not be deemed to be "suspect" by the image processing means and a further check will not ensue, at least not on the bases of the above-described comparison.

In the case that an object is deemed to be "suspect", however, measures for checking the object may initially consist of, for example, the belt conveyor 21 being stopped and a person reviewing video images of the object made by the video camera 32, for example on the or at least a screen of the computer system 33. Said images may start 5 or 10 seconds, for example, before the infrared image in question was made, so that also the conditions surrounding the making of the infrared images can be viewed by the person in question. The person in question can in principle carry out his job at a location physically far removed from the check-in system, for example in another part of the airport in question or even in another country. To help him carry out his work, the person in question may optionally also make use of any images of the visible light type that have been made of the object. Said images may conceivably also have been made by the camera 31, or a separate additional camera (not shown) may be provided, which additional camera is also connected to the computer system 33. It is furthermore also conceivable within the framework of the present invention for the images of the visible light type and/or the video images made by the video camera 32 to be analysed.by the image processing means as well in support of the aforesaid person's work, or even in addition to the analysis of the infrared images made by the camera 31.

Alternatively, or in combination with a further camera, the check-in system may also be provided with a still further camera by means of which 3-dimensional images can be made. Such a camera may project lines over an object, for example, and from said lines information about the height profile, and thus about the 3-dimensional nature of the object, can be derived by the image processing means. Said still further camera may for example operate in the near infrared wavelength range. Also the images made by said still further camera may be used, after analysis by the image processing means, in support of placing an object in the correct category.

In the case that an object is actually deemed to be "suspect", measures for checking the objects may alternatively, or in combination with the measure described above, also consist of blocking a passage upstream of the checking location 24 by means of a gate 42 or the like. In the schematic figure, the gate 42 is disposed relatively close to the checking location 24, but it should be understood that the distance between the gate 42 and the checking location 24 may in fact be larger. The gate 42 prevents persons from undesirably getting into a luggage handling space or a space that is otherwise secured.

If the person, based on his observations of the video images, comes to the conclusion that the image processing means have incorrectly deemed an object to be "suspect", said person can start the belt conveyor 21 or have it started and/or open the gate 42 again. If, however, said person does not have reason to assume that the image processing means have incorrectly deemed the object in question to be "suspect", still further measures for checking the object are needed. Said measures may for example consist of a(nother) person checking the object in question at the location of said objects and/or a further belt conveyor 42 connecting to the belt conveyor 21 upstream thereof being stopped.

## Claims

1. A conveying system for pieces of luggage, comprising a conveyor for conveying pieces of luggage, detection means provided with a camera for making an image of at least one object, normally being a single piece of luggage, present on the conveyor at a checking location, and image processing means for the automated processing of images made by the camera, **characterised in that** the camera is a camera designed to make images of the infrared type, wherein the image processing means are designed to process images of the infrared type and the image processing means have at their disposal information regarding infrared images of non-suspect pieces of luggage exhibiting at least one area with an elevated temperature, wherein the image processing means are further designed to make a comparison between an infrared image made by the camera that exhibits at least one elevated temperature area and said information for deeming or not deeming the at least one object that is the subject of the infrared image made by the camera to be "suspect" on the basis of the comparison by the image processing means.

2. A conveying system according to claim 1, **characterised in that** the detection means also comprises a further camera that is designed to make images of the visible light type.

3. A conveying system according to claim 2, **characterised in that** the image processing means are also designed to process images of the visible light type.

4. A conveying system according to any one of the preceding claims, **characterised in that** the detection means comprise a still further camera designed to make 3-dimensional images, wherein the image processing means are also designed to process information regarding the 3-dimensional nature of an image made by said still further camera.

5. A conveying system according to claim 4, **characterised in that** said still further camera is obtained if said camera is of the line-scanning type.

6. A conveying system according to claim 4 or 5, **characterised in** said still further camera is of the near IR type.

7. A conveying system according to any one of the preceding claims, **characterised in that** the conveying system also comprises blocking means for blocking a passage to pieces of luggage, using a blocking element, which passage is located downstream of the checking location.

8. A check-in system for pieces of luggage, comprising a conveying system according to any one of the preceding claims, **characterised in that** the check-in system comprises at least one check-in station and **in that** the conveyor of the conveying system is designed to convey checked-in pieces of luggage from said at least one check-in station to a luggage handling system.

9. A check-in system according to claim 8, **characterised in that** the check-in system comprises a number of check-in stations arranged in a row, wherein the conveyor extends along the row of check-in stations and wherein the camera for making infrared images is designed to make images of pieces of luggage on the conveyor on the downstream side of the row of check-in stations.

10. A method for using a conveying system according to any one of claims 1-9, comprising the steps of:
- making an infrared image of at least one object, normally being a single piece of luggage on the conveyor, using a camera,
- the image processing means comparing an infrared image made by the camera with information regarding infrared images of non-suspect pieces of luggage exhibiting at least one elevated temperature area if the image in question comprises at least one elevated temperature area,
- the image processing means deeming the at least one object that is the subject of the infrared image made by the camera to be "suspect" if it has been established upon said comparison that the infrared image in question does not correspond to an infrared image which, according to said information, relates to non-suspect pieces of luggage.

11. A method according to claim 10, **characterised by** the taking of further measures for checking an object if said object has been deemed to be "suspect" by the image processing means, said further measures comprising a person designating an object that has been deemed to be "suspect" by the image processing means as "correctly suspect" or "incorrectly suspect" on the basis on observations of the object by said person.

12. A method according to claim 11, **characterised by** the steps of:
- making video images of the visual type of pieces of luggage while said pieces of luggage are being conveyed by the conveyor and storing said images, at least temporarily, whilst the infrared images of said pieces of luggage are being made by the infrared camera,
- displaying stored video images of an object to the person for checking the object deemed to be "suspect" by the image processing means in order that further measures can be taken, preferably the video images displayed to the person starting before the infrared image of the object deemed to be "suspect" by the image processing means was made,
- said person designating the object deemed to be "suspect" by the image processing means as "correctly suspect" or "incorrectly suspect" at least partially on the basis of the images being displayed.

13. A method according to claim 11 or 12, **characterised in that** the measures for checking the object in question preferably comprise stopping the conveyor and/or physically blocking, using a blocking element, a passage located downstream of the checking location.

14. A method according to claim 11, 12 or 13, **characterised by** the taking of still further measures for checking the object in question and/or the surroundings thereof if the person has designated the piece of luggage in question as "correctly suspect", said still further measures comprising:
- the checking of the object in question by at least one person at the location of the object in question, and/or
- the stopping of at least one further conveyor connecting to the conveyor at an upstream location.

15. A method according to any one of claims 10-14, using a system according to claim 3 or 4, **characterised by** designating the at least one object that is the subject of the images made by the camera and possibly the further camera and/or the still further camera as "suspect" partially on the basis of images of the visible light type made by the camera or the further camera as processed by the image processing means and/or partially on the basis of 3-dimensional images made by the still further camera as processed by the image processing means.

## Patentansprüche

1. Förderanlage für Gepäckstücke, mit einem Förderer zum Fördern von Gepäckstücken, Erfassungseinrichtungen, die mit einer Kamera zum Erstellen eines Bildes von wenigstens einem Objekt versehen sind, das normalerweise ein einzelnes Gepäckstück ist, das sich an einer Kontrollstelle auf dem Förderer befindet, und Bildverarbeitungsmitteln für das automatisierte Verarbeiten von von der Kamera erstellten Bildern, **dadurch gekennzeichnet, dass** die Kamera eine Kamera ist, die zum Erstellen von Bildern vom Infrarottyp ausgebildet ist, wobei die Bildverarbeitungsmittel dazu ausgebildet sind, Bilder vom Infrarottyp zu verarbeiten, und die Bildverarbeitungsmittel über Informationen in Bezug auf Infrarotbilder von nicht verdächtigen Gepäckstücken verfügen, die zumindest einen Bereich mit einer erhöhten Temperatur aufweisen, wobei die Bildverarbeitungsmittel ferner dazu ausgebildet sind, einen Vergleich zwischen einem von der Kamera erstellten Infrarotbild, das wenigstens einen temperaturerhöhten Bereich aufweist, und den Informationen zu ziehen, um das wenigstens eine Objekt, das der Gegenstand des von der Kamera erstellten Infrarotbildes ist, anhand des Vergleichs durch die Bildverarbeitungsmittel als "verdächtig" zu erachten oder nicht.

2. Förderanlage nach Anspruch 1, **dadurch gekennzeichnet, dass** die Erfassungseinrichtung auch eine weitere Kamera umfasst, die dazu ausgebildet ist, Bilder vom Typ des sichtbaren Lichts zu erstellen.

3. Förderanlage nach Anspruch 2, **dadurch gekennzeichnet, dass** die Bildverarbeitungsmittel auch dazu ausgebildet sind, Bilder vom Typ des sichtbaren Lichts zu verarbeiten.

4. Förderanlage nach einem der vorhergehenden Ansprüche, **dadurch gekennzeichnet, dass** die Erfassungseinrichtungen eine noch weitere Kamera umfassen, die dazu ausgebildet ist, dreidimensionale Bilder zu erstellen, wobei die Bildverarbeitungsmittel auch dazu ausgebildet sind, Informationen bezüglich der dreidimensionalen Beschaffenheit eines von der noch weiteren Kamera erstellten Bildes zu verarbeiten.

5. Förderanlage nach Anspruch 4, **dadurch gekennzeichnet, dass** die noch weitere Kamera hinzukommt, wenn die Kamera vom Typ der Zeilenabtaster ist.

6. Förderanlage nach Anspruch 4 oder 5, **dadurch gekennzeichnet, dass** die noch weitere Kamera vom Typ der NIR-Kameras ist.

7. Förderanlage nach einem der vorhergehenden Ansprüche, **dadurch gekennzeichnet, dass** die Förderanlage auch Sperreinrichtungen umfasst, um unter Verwendung eines Sperrelements einen Durchlass für Gepäckstücke zu sperren, wobei der Durchlass stromabwärts der Kontrollstelle gelegen ist.

8. Check-in-System für Gepäckstücke, mit einer Förderanlage nach einem der vorhergehenden Ansprüche, **dadurch gekennzeichnet, dass** das Check-in-System wenigstens eine Check-in-Station umfasst und dass der Förderer der Förderanlage dazu ausgebildet ist, eingecheckte Gepäckstücke von der wenigstens einen Check-in-Station zu einem Gepäckabfertigungssystem zu fördern.

9. Check-in-System nach Anspruch 8, **dadurch gekennzeichnet, dass** das Check-in-System eine Anzahl von in einer Reihe angeordneten Check-in-Stationen umfasst, wobei der Förderer sich längs der Reihe von Check-in-Stationen erstreckt und wobei die Kamera zur Erstellung von Infrarotbildern dazu ausgebildet ist, Bilder von Gepäckstücken auf dem Förderer auf der stromabwärtigen Seite der Reihe von Check-in-Stationen zu erstellen.

10. Verfahren zur Verwendung einer Förderanlage nach einem der Ansprüche 1 - 9, mit den Schritten, bei denen:
- ein Infrarotbild von wenigstens einem Objekt, das normalerweise ein einzelnes Gepäckstück auf dem Förderer ist, unter Verwendung einer Kamera erstellt wird,
- die Bildverarbeitungsmittel ein von der Kamera erstelltes Infrarotbild mit Informationen vergleichen, die sich auf Infrarotbilder von nicht verdächtigen Gepäckstücken beziehen, die wenigstens einen temperaturerhöhten Bereich aufweisen, falls das betreffende Bild wenigstens einen temperaturerhöhten Bereich umfasst,
- die Bildverarbeitungsmittel das wenigstens eine Objekt, welches der Gegenstand des von der Kamera erstellten Infrarotbildes ist, als "verdächtig" erachten, wenn bei dem Vergleich festgestellt worden ist, dass das betreffende Infrarotbild nicht einem Infrarotbild entspricht, das sich gemäß den Informationen auf nicht verdächtige Gepäckstücke bezieht.

11. Verfahren nach Anspruch 10, **gekennzeichnet durch** das Ergreifen weiterer Maßnahmen zur Kontrolle eines Objekts, wenn das Objekt von den Bildverarbeitungsmitteln als "verdächtig" erachtet worden ist, wobei die weiteren Maßnahmen eine Person umfassen, die ein Objekt, das von den Bildverarbeitungsmitteln als "verdächtig" erachtet worden ist, auf Grund von Betrachtungen des Objekts **durch** die Person als "richtigerweise verdächtig" oder "fälschlicherweise verdächtig" bezeichnet.

12. Verfahren nach Anspruch 11, **gekennzeichnet durch** die Schritte, bei denen:
- Videobilder des visuellen Typs von Gepäckstücken erstellt werden, während die Gepäckstücke von dem Förderer gefördert werden, und die Bilder zumindest temporär gespeichert werden, während die Infrarotbilder der Gepäckstücke von der Infrarotkamera erstellt werden,
- gespeicherte Videobilder eines Objekts der Person zur Kontrolle des von den Bildverarbeitungsmitteln als "verdächtig" erachteten Objekts angezeigt werden, damit weitere Maßnahmen ergriffen werden können, wobei die der Person angezeigten Videobilder vorzugsweise beginnen, bevor das Infrarotbild des von den Bildverarbeitungsmitteln als "verdächtig" erachteten Objekts erstellt wurde,
- die Person das von den Bildverarbeitungsmitteln als "verdächtig" erachtete Objekt zumindest teilweise anhand der angezeigten Bilder als "richtigerweise verdächtig" oder "fälschlicherweise verdächtig" bezeichnet.

13. Verfahren nach Anspruch 11 oder 12, **dadurch gekennzeichnet, dass** die Maßnahmen zur Kontrolle des fraglichen Objekts vorzugsweise das Anhalten des Förderers und/oder das physische Sperren eines stromabwärts der Kontrollstelle gelegenen Durchlasses unter Verwendung eines Sperrelements umfassen.

14. Verfahren nach Anspruch 11, 12 oder 13, **gekennzeichnet durch** das Ergreifen noch weiterer Maßnahmen zur Kontrolle des fraglichen Objekts und/oder dessen Umgebung, wenn die Person das betreffende Gepäckstück als "richtigerweise verdächtig" bezeichnet hat, wobei die noch weiteren Maßnahmen Folgendes umfassen:
- die Kontrolle des fraglichen Objekts **durch** wenigstens eine Person an der Position des fraglichen Objekts und/oder
- das Anhalten wenigstens eines weiteren Förderers, der an einer stromaufwärtigen Stelle mit dem Förderer in Verbindung steht.

15. Verfahren nach einem der Ansprüche 10 - 14 unter Verwendung einer Anlage nach Anspruch 3 oder 4, **dadurch gekennzeichnet, dass** das wenigstens eine Objekt, das der Gegenstand der von der Kamera und gegebenenfalls der weiteren Kamera und/oder der noch weiteren Kamera erstellten Bilder ist, zum Teil aufgrund von von der Kamera oder der weiteren Kamera erstellten Bildern vom Typ des sichtbaren Lichts, wie sie von den Bildverarbeitungsmitteln verarbeitet werden, und/oder zum Teil aufgrund von von der noch weiteren Kamera erstellten dreidimensionalen Bildern, wie sie von den Bildverarbeitungsmitteln verarbeitet werden, als "verdächtig" bezeichnet wird.

## Revendications

1. Système de transport pour des bagages, comprenant un transporteur pour transporter des bagages, des moyens de détection pourvus d'une caméra pour prendre une image d'au moins un objet, qui est normalement un seul bagage, présent sur le transporteur à un emplacement de contrôle, et des moyens de traitement d'image pour le traitement automatisé d'images prises par la caméra, **caractérisé en ce que** la caméra est une caméra conçue pour prendre des images du type infrarouge, dans lequel les moyens de traitement d'image sont conçus pour traiter des images du type infrarouge et les moyens de traitement d'image ont à leur disposition des informations concernant des images infrarouges de bagages non suspects présentant au moins une zone avec une température élevée, dans lequel les moyens de traitement d'image sont en outre conçus pour faire une comparaison entre une image infrarouge prise par la caméra qui présente au moins une zone de température élevée et lesdites informations pour juger ou ne pas juger le au moins un objet qui est le sujet de l'image infrarouge prise par la caméra comme étant « suspect » sur la base de la comparaison par les moyens de traitement d'image.

2. Système de transport selon la revendication 1, **caractérisé en ce que** les moyens de détection comprennent également une autre caméra qui est conçue pour prendre des images du type à lumière visible.

3. Système de transport selon la revendication 2, **caractérisé en ce que** les moyens de traitement d'image sont également conçus pour traiter des images du type à lumière visible.

4. Système de transport selon l'une quelconque des revendications précédentes, **caractérisé en ce que** les moyens de détection comprennent encore une autre caméra conçue pour prendre des images tridimensionnelles, dans lequel les moyens de traitement d'image sont également conçus pour traiter des informations concernant la nature tridimensionnelle d'une image prise par ladite encore une autre caméra.

5. Système de transport selon la revendication 4, **caractérisé en ce que** ladite encore une autre caméra est obtenue si ladite caméra est du type à balayage en ligne.

6. Système de transport selon la revendication 4 ou 5, **caractérisé en ce que** ladite encore une autre caméra est du type IR proche.

7. Système de transport selon l'une quelconque des revendications précédentes, **caractérisé en ce que** le système de transport comprend également des moyens de blocage pour bloquer un passage à des bagages, en utilisant un élément de blocage, lequel passage est situé en aval de l'emplacement de contrôle.

8. Système d'enregistrement pour des bagages, comprenant un système de transport selon l'une quelconque des revendications précédentes, **caractérisé en ce que** le système d'enregistrement comprend au moins une station d'enregistrement et **en ce que** le transporteur du système de transport est conçu pour transporter des bagages enregistrés de ladite au moins une station d'enregistrement à un système de manutention des bagages.

9. Système d'enregistrement selon la revendication 8, **caractérisé en ce que** le système d'enregistrement comprend un certain nombre de stations d'enregistrement agencées dans une rangée, dans lequel le transporteur s'étend le long de la rangée de stations d'enregistrement et dans lequel la caméra pour prendre des images infrarouges est conçue pour prendre des images de bagages sur le transporteur sur le côté aval de la rangée de stations d'enregistrement.

10. Procédé pour utiliser un système de transport selon l'une quelconque des revendications 1 à 9, comprenant les étapes consistant à :
- prendre une image infrarouge d'au moins un objet, qui est normalement un seul bagage sur le transporteur, en utilisant une caméra,
- les moyens de traitement d'image comparant une image infrarouge prise par la caméra avec des informations concernant des images infrarouges de bagages non suspects présentant au moins une zone de température élevée si l'image en question comprend au moins une zone de température élevée,
- les moyens de traitement d'image jugeant le au moins un objet qui est le sujet de l'image infrarouge prise par la caméra comme étant « suspect » s'il a été établi lors ladite comparaison que l'image infrarouge en question ne correspond pas à une image infrarouge qui, en fonction desdites informations, se rapporte à des bagages non suspects.

11. Procédé selon la revendication 10, **caractérisé par** la prise d'autres mesures pour contrôler un objet si ledit objet a été jugé comme étant « suspect » par les moyens de traitement d'image, lesdites autres mesures comprenant une personne désignant un objet qui a été jugé comme étant « suspect » par les moyens de traitement d'image comme « correctement suspect » ou « incorrectement suspect » sur la base d'observations de l'objet par ladite personne.

12. Procédé selon la revendication 11, **caractérisé par** les étapes consistant à :
- prendre des images vidéo du type visuel de bagages pendant que lesdits bagages sont transportés par le transporteur et stocker lesdites images, au moins temporairement, tandis que les images infrarouges desdits bagages sont prises par la caméra infrarouge,
- afficher des images vidéo stockées d'un objet à la personne pour contrôler l'objet jugé comme étant « suspect » par les moyens de traitement d'image afin que d'autres mesures puissent être prises, de préférence les images vidéo affichées à la personne commençant avant que l'image infrarouge de l'objet jugé comme étant « suspect » par les moyens de traitement d'image ne soit prise,
- ladite personne désignant l'objet jugé comme étant « suspect » par les moyens de traitement d'image comme « correctement suspect » ou « incorrectement suspect » au moins en partie sur la base des images qui sont affichées.

13. Procédé selon la revendication 11 ou 12, **caractérisé en ce que** les mesures pour contrôler l'objet en question comprennent de préférence l'arrêt du transporteur et/ou le blocage physique, en utilisant un élément de blocage, d'un passage situé en aval de l'emplacement de contrôle.

14. Procédé selon la revendication 11, 12 ou 13, **caractérisé par** la prise d'encore d'autres mesures pour contrôler l'objet en question et/ou les environs de celui-ci si la personne a désigné le bagage en question comme « correctement suspect », lesdites encore d'autres mesures comprenant :
- le contrôle de l'objet en question par au moins une personne à l'emplacement de l'objet en question, et/ou
- l'arrêt d'au moins un autre transporteur se connectant au transporteur à un emplacement en amont.

15. Procédé selon l'une quelconque des revendications 10 à 14, utilisant un système selon la revendication 3 ou 4, **caractérisé par** la désignation du au moins un objet qui est le sujet des images prises par la caméra et éventuellement l'autre caméra et/ou la encore une autre caméra comme « suspect » en partie sur la base d'images du type à lumière visible prises par la caméra ou l'autre caméra traitées par les moyens de traitement d'image et/ou en partie sur la base d'images tridimensionnelles prises par la encore une autre caméra traitées par les moyens de traitement d'image.
